# EUROPÄISCHE PATENTSCHRIFT

(11) **EP 4 078 214 B1**
(45) Veröffentlichungstag und Bekanntmachung des Hinweises auf die Patenterteilung: **18.12.2024**
(21) Anmeldenummer: 21711764.7
(22) Anmeldetag: 02.03.2021
(51) Int. Cl.: G01S 7/40, G01S 13/931, G01S 13/76

(54) **SYSTEM ZUR ÜBERWACHUNG EINER VERKEHRSSITUATION**
SYSTEM FOR MONITORING A TRAFFIC SITUATION
SYSTÈME DE SURVEILLANCE D'UNE SITUATION DE TRAFIC

(30) Priorität: 23.03.2020 DE 102020203715
(43) Veröffentlichungstag der Anmeldung: 26.10.2022
(73) Patentinhaber: Robert Bosch GmbH, 70839 Gerlingen-Schillerhöhe (DE)
(72) Erfinder: POPRAWA, Florian, 79100 Freiburg (DE); SCHMID, Rolf, 8713 Uerikon (CH); FIEGE, Ludger, 85567 Grafing (DE)
(74) Vertreter: Bee, Joachim
(86) Internationale Anmeldenummer: PCT/EP2021/055136
(87) Internationale Veröffentlichungsnummer: WO 2021/190872

(56) Entgegenhaltungen:
- WO-A1-95/20172
- DE-A1- 102016 221 440
- DE-A1- 19 946 161

## Beschreibung

Die Erfindung betrifft ein System zur Überwachung einer Verkehrssituation.

Die Radarentwicklung hat in den letzten Jahren im Mobility Sektor stark und stetig zugenommen. Für selbstfahrende Autos wie auch selbstfahrende Züge sind Radarsysteme notwendig, damit Hindernisse zuverlässig erkannt werden können. Durch die Frequenzspektrum Zuteilung von ETSI bis über 70 GHz können nun Radarsensoren auch physikalisch sehr klein gebaut werden.

Die Autobauer und Industrie setzten die Radarsensoren hauptsächlich für die Objekterkennung von 0 bis 300m Entfernung und für die Geschwindigkeitsmessung ein. Die auf dem Markt vorhanden Sensoren agieren als reine Sensoren, d.h. sie detektieren ihre Umgebung auf Basis ausgesandter Radarwellen. Das reflektierte Signal am Radar-Empfänger ändert stetig und ist abhängig von der Messobjektoberfläche und des Messorts.

Anhand der an Objekten innerhalb eines Überwachungsbereichs einer Sensoreinheit reflektierten und von der jeweiligen Sensoreinheit empfangenen Radarsignalen kann die jeweilige Verkehrssituation im Überwachungsbereich der Sensoreinheit bestimmt werden, die zum Steuern eines autonom fahrenden Fahrzeugs benötigt wird. Insbesondere wenn Sensoreinheiten zum Steuern autonom fahrender Fahrzeuge genutzt werden, ist eine Kenntnis der Funktionsfähigkeit der verwendeten Sensoreinheiten unerlässlich.

WO 95/20172 A1 offenbart ein System aus einem fahrzeugseitigen Radarsystem zum Senden von Radarsignalen und zum Empfangen von durch ein Ziel reflektierten Radarsignalen und aus einem streckenseitigen Transponder, der mit dem fahrzeugseitigen Radarsystem kommunizieren kann. Der Transponder ist an einer ortsfesten Lage entlang einer Fahrbahn verbaut und in der Lage, Radarsignale von dem fahrzeugseitigen Radarsystem zu empfangen, welche Abfragenachrichten an den streckenseitigen Transponder umfassen. Der Transponder meldet fest vorprogrammierte Nachrichten zurück an das fahrzeugseitige Radarsystem.

Aus der Offenlegungsschrift DE 10 2016 221 440 A1 ist ein Verfahren zur Diagnose eines in einem Fahrzeug installierten Sensorsystems zur Erfassung von Objekten im Umfeld dieses Fahrzeugs bekannt. Es werden Daten, die ein Referenzobjekt charakterisieren, über ein ITS-Kommunikationssystem an das Fahrzeug übermittelt, im Fahrzeug anhand der übermittelten Daten erwartete Erfassungsdaten für das Referenzobjekt berechnet, und die erwarteten Erfassungsdaten mit tatsächlichen Erfassungsdaten verglichen, die bei Erfassung des Referenzobjekts durch das Sensorsystem erhalten werden.

Für eine zuverlässige Überwachung einer Verkehrssicherheit ist es essentiell, den Funktionszustand der genutzten Sensoreinheit durchgehend bestimmen zu könne, um gegebenenfalls fehlerhafte Sensoreinheiten identifizieren zu können.

Die Aufgabe der vorliegenden Erfindung ist es, ein System zur Überwachung einer Verkehrssituation bereitzustellen, das eine verlässliche Identifikation von fehlerhaften Sensoreinheiten ermöglicht.

Diese Aufgabe wird durch das System des unabhängigen Anspruchs gelöst. Weiterbildungen sind in den abhängigen Patentansprüchen angegeben.

Nach einem Aspekt der Erfindung wird ein System zum Überwachen einer Verkehrssituation bereitgestellt, umfassend: wenigstens eine Radarsensoreinheit zum Aufnehmen von Umgebungsdaten eines Überwachungsbereichs der Radarsensoreinheit, wobei die Radarsensoreinheit eingerichtet ist, Radarsignale in Richtung des Überwachungsbereichs auszusenden, von Gegenständen innerhalb des Überwachungsbereichs zur Radarsensoreinheit reflektierte Radarsignale zu Empfangen und auf Basis der empfangenen Radarsignal Umgebungsdaten des Überwachungsbereichs zu generieren;
eine Prozessoreinheit zum Auswerten der Umgebungsdaten der Radarsensoreinheit und zum Bestimmen der Verkehrssituation innerhalb des Überwachungsbereichs auf Basis der Umgebungsdaten der Radarsensoreinheit; und
eine Referenzsignaleinheit zum Ausgeben eines Referenzsignals an die Radarsensoreinheit,
dadurch gekennzeichnet, dass
die Referenzsignaleinheit eingerichtet ist, ein von der Radarsensoreinheit ausgesendetes Radarsignal mit einer Modulation zu versehen und als Referenzsignal das modulierte Radar-Signal zur Radarsensoreinheit zurück zu reflektieren, und
dass die Prozessoreinheit eingerichtet ist, das modulierte Radarsignal als Referenzsignal der Referenzsignaleinheit zu identifizieren und eine Fehlfunktion die Radarsensoreinheit zu erkennen, falls durch die Radarsensoreinheit kein Referenzsignal empfangen wird.

Hierdurch wird der technische Vorteil erreicht, dass ein System zum Überwachen einer Verkehrssituation bereitgestellt werden kann, das geeignet ist, eine Funktionsweise einer Radarsensoreinheit während des Betriebs zu überprüfen. Mittels der Referenzsignaleinheit kann an die Radarsensoreinheit ein Referenzsignal gesendet werden, das von der Radarsensoreinheit detektiert und von der Prozessoreinheit interpretiert werden kann. Für den Fall, dass ein solches Referenzsignal von der Radarsensoreinheit nicht detektiert wird, kann die Prozessoreinheit eine Fehlfunktion der jeweiligen Radarsensoreinheit identifizieren und gegebenenfalls die Überwachung der Verkehrssituation als fehlerhaft interpretieren und diese beenden.

Die Referenzsignaleinheit ist eingerichtet, die von der Radarsensoreinheit zum Überwachen des Überwachungsbereichs der Radarsensoreinheit ausgesendeten Radarsignale zu reflektieren und zur Radarsensoreinheit zurückzusenden. Während des Reflexionsprozesses der Radarsignale durch die Referenzsignaleinheit werden den reflektierten Radarsignalen durch die Referenzsignaleinheit eine individuelle Modulation aufgeprägt, durch die die reflektierten Radarsignale von der Prozessoreinheit als Referenzsignal der Referenzsignaleinheit identifiziert werden können. Hierdurch wird ferner der technische Vorteil erreicht, dass für die Referenzsignaleinheit keine gesonderte Sendeeinheit zum Aussenden des Referenzsignals benötigt wird. Die Referenzsignale der Referenzsignaleinheit basieren ausschließlich auf den von der Radarsensoreinheit ausgesendeten Radarsignalen.

Radarsignale sind im Sinne der Anmeldung Signale elektromagnetischer Strahlung im für die Radaranwendung üblichen Frequenzbereich zwischen 60 GHz und 120 GHz.

Eine Verkehrssituation ist im Sinne der Anmeldung eine Situation im Straßenverkehr oder Schienenverkehr. Eine Verkehrssituation kann ein Verkehrsaufkommen von Fahrzeugen, insbesondere Pkw, Lkw, Motorräder, Fahrräder oder Fußgänger, bzw. Schienenfahrzeuge umfassen. Eine Verkehrssituation kann auch eine Abwesenheit jeglicher Verkehrsteilnehmer umfassen.

Die Referenzsignaleinheit weist erfindungsgemäß einen ersten Reflexionszustand und einen zweiten Reflexionszustand auf, und wobei ein von der Referenzsignaleinheit im ersten Reflexionszustand reflektiertes Radarsignal in wenigstens einer Eigenschaft von einem von der Referenzsignaleinheit im zweiten Reflexionszustand reflektiertem Radarsignal abweicht, und wobei die Referenzsignaleinheit alternierend zwischen dem ersten Reflexionszustand und dem zweiten Reflexionszustand in einer Schaltfrequenz verschaltbar ist.

Hierdurch wird der technische Vorteil erreicht, dass bei der Reflexion der Radarsignale der Radarsensoreinheit durch die Referenzsignaleinheit den reflektierten Radarsignalen eine Modulation aufgeprägt werden kann, sodass als Referenzsignale an der Referenzsignaleinheit reflektierte Radarsignale mit einer aufgeprägten Modulation erzeugt werden können. Durch das alternierende Verschalten der Referenzsignaleinheit zwischen den ersten und zweiten Reflexionszuständen kann ein Referenzsignal erzeugt werden, das alternierende Signalabschnitte umfasst, die jeweils in wenigstens einer Eigenschaft voneinander abweichen. Diese Eigenschaft kann beispielsweise eine Amplitude der reflektierten Radarsignale sein, sodass durch das alternierende Verschalten zwischen den beiden Reflexionszuständen ein amplitudenmoduliertes oder phasenmoduliertes reflektiertes Radarsignal als Referenzsignal erzeugt werden kann.

Gemäß einer Ausführungsform weist die Referenzsignaleinheit eine erste Reflexionsfläche auf, die eingerichtet ist, Radarsignale der Radarsensoreinheit zu reflektieren, wobei im ersten Reflexionszustand die Reflexionsfläche in eine Reflexionsstellung gebracht ist, in der eine Reflexion der Radarsignale der Radarsensoreinheit ermöglicht ist, und wobei im zweiten Reflexionszustand die Reflexionsfläche in eine Nicht-Reflexionsstellung gebracht ist, in der eine Reflexion der Radarsignale der Radarsensoreinheit unterbunden ist.

Hierdurch wird der technische Vorteil erreicht, dass eine einfache Lösung zur Erzeugung des Referenzsignals als moduliertes reflektiertes Radarsignal bereitgestellt werden kann. Indem alternierend die erste Reflexionsfläche zwischen einer Reflexionsstellung, in der eine Reflexion der Radarsignale der Radarsensoreinheit ermöglicht ist, und einer Nichtreflexionsstellung, in der keine Reflexion der Radarsignale erfolgt, verschaltet wird, kann ein amplitudenmoduliertes reflektiertes Radarsignal als Referenzsignal erzeugt werden. Hierdurch ist eine möglichst einfache Realisierung des modulierten Referenzsignals erreicht.

Alternativ können die Reflexionsflächen durch äquivalente Antennenelemente realisiert sein, wobei zum Verschalten der Reflexionsflächen zwischen Nicht-Reflexionsstellung und Reflexionsstellung die Antennenelemente elektronisch steuerbar abwechselnd in einen nicht-reflektierenden Zustand und/oder in einen reflektierenden Zustand verschaltbar sind.

Gemäß einer Ausführungsform weist die Referenzsignaleinheit ferner eine zweite Reflexionsfläche auf, wobei die zweite Reflexionsfläche eingerichtet ist, Radarsignale der Radarsensoreinheit zu reflektieren, und wobei im zweiten Reflexionszustand die zweite Reflexionsfläche in eine Reflexionsstellung gebracht ist, in der eine Reflexion der Radarsignale der Radarsensoreinheit durch die zweite Reflektoreinheit ermöglicht ist.

Hierdurch wird der technische Vorteil erreicht, dass eine weitere einfache Lösung zur Erzeugung des modulierten Referenzsignals bereitgestellt werden kann. Indem die ersten und zweiten Reflexionsflächen abwechselnd in Reflexionsstellung gebracht werden, kann ein moduliertes reflektiertes Radarsignal erzeugt werden.

Gemäß einer Ausführungsform sind die erste Reflexionsfläche und die zweite Reflexionsfläche in unterschiedlicher Entfernung zur Radarsensoreinheit angeordnet.

Hierdurch wird der technische Vorteil erreicht, dass eine weitere einfache Lösung zur Erzeugung des modulierten Referenzsignals bereitgestellt werden kann. Durch die Beabstandung der beiden Reflexionsflächen zueinander in Richtung zur Radarsensoreinheit wird erreicht, dass die von der ersten Reflexionsfläche reflektierten Radarsignale bzw. die von der zweiten Reflexionsfläche reflektierten Radarsignale vom Aussenden durch die Radarsensoreinheit bis zum Empfang durch die Radarsensoreinheit unterschiedlich lange Wegstrecken zurücklegen. Durch das alternierende Verschalten der ersten und zweiten Reflexionsflächen in entsprechende Reflexionsstellungen kann somit ein moduliertes reflektiertes Radarsignal erzeugt werden mit abwechselnd angeordneten Signalabschnitten von unterschiedlich langen zurückgelegten Wegstrecken.

Gemäß einer Ausführungsform umfasst die Referenzsignaleinheit ein erstes Antennenarray und/oder ein zweites Antennenarray, wobei das Antennenarray und/oder zweite Antennenarray eingerichtet ist, Radarsignale der Radarsensoreinheit zu reflektieren, und wobei die erste Reflexionsfläche und/oder die zweite Reflexionsfläche durch das erste Antennenarray und/oder das zweite Antennenarray gebildet ist.

Hierdurch wird der technische Vorteil erreicht, dass eine weitere einfache Lösung zur Erzeugung des modulierten Referenzsignals bereitgestellt werden kann. Indem die erste Reflexionsfläche und/oder die zweite Reflexionsfläche durch ein erstes Antennenarray und/oder ein zweites Antennenarray gebildet ist, kann die Referenzsignaleinheit elektrisch zwischen dem ersten Reflexionszustand und dem zweiten Reflexionszustand verschaltet werden. Indem abwechselnd das erste Antennenarray und/oder das zweite Antennenarray an- bzw. ausgeschaltet werden, wobei im eingeschalteten Zustand das jeweilige Antennenarray ein empfangenes Radarsignal zur Radarsensoreinheit zurückreflektieren kann, während im ausgeschalteten Zustand eine Reflexion des Radarsignals nicht möglich ist, kann ein moduliertes reflektiertes Radarsignal erzeugt werden. Durch die elektrische Verschaltung bzw. das elektrische An- und Ausschalten der beiden Antennenarrays kann eine beliebige Schaltfrequenz der Referenzsignaleinheit und damit verbunden eine beliebige Modulationsfrequenz des Referenzsignals erreicht werden.

Gemäß einer Ausführungsform umfasst die Referenzsignaleinheit einen Reflektorkörper mit wenigstens einer Körperfläche, wobei auf der wenigstens einen Körperfläche eine Reflexionsschicht aufgetragen ist, wobei die

Reflexionsschicht eingerichtet ist, Radarsignal zu reflektieren, und wobei die erste Reflexionsfläche und/oder die zweite Reflexionsfläche durch die auf der wenigstens einen Körperfläche aufgetragenen Reflexionsschicht gebildet ist.

Hierdurch wird der technische Vorteil erreicht, dass eine weitere einfache Lösung zur Erzeugung des modulierten Referenzsignals bereitgestellt werden kann. Hierzu umfasst die Referenzsignaleinheit einen Reflektorkörper mit wenigstens einer Körperfläche, auf der eine Reflexionsschicht aufgetragen ist, die eingerichtet ist, Radarsignale zu reflektieren. Indem alternierend die Reflexionsschicht in Reflexionsstellung gebracht wird, in der eine Reflexion der Radarsignale der Radarsensoreinheit ermöglicht ist, während in einer Nichtreflexionsstellung der Reflexionsschicht keine Reflexion der Radarsignale ermöglicht ist, kann wiederum ein amplitudenmoduliertes reflektiertes Radarsignal erzeugt werden.

Gemäß einer Ausführungsform ist die Radarsensoreinheit ortsfest an einem zu überwachenden Straßenabschnitt oder Schienenabschnitt positioniert, und wobei die Referenzsignaleinheit ortsfest im Überwachungsbereich der Radarsensoreinheit positioniert ist.

Hierdurch wird der technische Vorteil erreicht, dass eine ortsfeste Verkehrssituation überwacht werden kann. Indem die Radarsensoreinheit ortsfest an einem zu überwachenden Straßenabschnitt oder Schienenabschnitt positioniert ist, können Verkehrssituationen dieses ausgewählten Straßenabschnitts bzw. Schienenabschnitts überwacht werden.

Indem die Referenzsignaleinheit ortsfest im Überwachungsbereich der Radarsensoreinheit positioniert ist, kann gewährleistet werden, dass durch Ausbleiben einer Detektion eines Referenzsignals der Referenzsignaleinheit durch die Radarsensoreinheit eine Fehlfunktion der Radarsensoreinheit bestimmt werden kann. Hierdurch kann ein zuverlässiges ortsfestes System zur Überwachung einer Verkehrssituation bereitgestellt werden.

Gemäß einer Ausführungsform umfasst das System ferner eine weitere Radarsensoreinheit zum Aufnehmen von Umgebungsdaten eines weiteren Überwachungsbereichs der weiteren Radarsensoreinheit, wobei die weitere Radarsensoreinheit eingerichtet ist, weitere Radarsignale in Richtung des weiteren Überwachungsbereichs auszusenden, von Gegenständen innerhalb des weiteren Überwachungsbereichs zur weiteren Radarsensoreinheit reflektierte Radarsignale zu empfangen und auf Basis der empfangenen weiteren Radarsignal weitere Umgebungsdaten des weiteren Überwachungsbereichs zu generieren;
eine weitere Prozessoreinheit zum Auswerten der weiteren Umgebungsdaten der weiteren Radarsensoreinheit und zum Bestimmen der Verkehrssituation innerhalb des weiteren Überwachungsbereichs auf Basis der weiteren Umgebungsdaten der weiteren Radarsensoreinheit, wobei die Referenzsignaleinheit eingerichtet ist, von der weiteren Radarsensoreinheit ausgesendete weitere Radarsignale mit der Modulation zu versehen und als weiteres Referenzsignal ein weiteres moduliertes Radarsignal zur weiteren Radarsensoreinheit zurück zu reflektieren, wobei die weitere Prozessoreinheit eingerichtet ist, das weitere modulierte Radarsignal als weiteres Referenzsignal der Referenzsignaleinheit zu identifizieren und eine Fehlfunktion der weiteren Radarsensoreinheit zu erkennen, falls durch die weitere Radarsensoreinheit kein weiteres Referenzsignal empfangen wird, und wobei die weitere Radarsensoreinheit an einem autonom fahrenden Fahrzeug angeordnet ist.

Hierdurch wird der technische Vorteil erreicht, dass ein System zur Überwachung einer Verkehrssituation bereitgestellt werden kann, bei dem mehrere Radarsensoreinheiten mittels der Referenzsignaleinheit auf deren Funktionsfähigkeit überprüft werden kann. Durch die weitere Radarsensoreinheit, die beispielsweise in einem autonom fahrenden Fahrzeug verbaut sein kann, können weitere Referenzsignale als reflektierte Radarsignale der weiteren Radarsensoreinheit erzeugt werden. Über die weitere Prozessoreinheit, die eingerichtet ist, die Umgebungsdaten der weiteren Radarsensoreinheit auszuwerten und eine entsprechende Verkehrssituation zu ermitteln, kann auf Basis der detektierten weiteren Referenzsignale eine Funktionsfähigkeit der weiteren Radarsensoreinheit bestimmt werden. Hierdurch kann der Einsatzbereich des Systems zur Überwachung einer Verkehrssituation vergrößert werden.

Gemäß einer Ausführungsform beträgt die Schaltfrequenz zwischen 60 GHz bis 85 GHz.

Hierdurch wird der technische Vorteil erreicht, dass eine Modulation der Referenzsignale und weiteren Referenzsignale mit einer Frequenz erreicht wird, die im Bereich einer handelsüblichen Radarsensoreinheit liegt und somit von dieser detektiert werden kann.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils
FIG 1 eine schematische Darstellung eines Systems zur Überwachung einer Verkehrssituation gemäß einer Ausführungsform;
FIG 2 eine weitere schematische Darstellung des Systems zur Überwachung einer Verkehrssituation gemäß einer weiteren Ausführungsform;
FIG 3 eine weitere schematische Darstellung des Systems zur Überwachung einer Verkehrssituation gemäß einer weiteren Ausführungsform;
FIG 4 eine weitere schematische Darstellung des Systems zur Überwachung einer Verkehrssituation gemäß einer weiteren Ausführungsform;
FIG 5 eine schematische Darstellung einer Referenzsignaleinheit des Systems zur Überwachung einer Verkehrssituation gemäß einer Ausführungsform;
FIG 6 eine schematische Darstellung der Referenzsignaleinheit des Systems zur Überwachung einer Verkehrssituation aus Fig. 5 in einem weiteren Zustand;
FIG 7 eine weitere schematische Darstellung der Referenzsignaleinheit des Systems zur Überwachung einer Verkehrssituation gemäß einer weiteren Ausführungsform;
FIG 8 eine weitere schematische Darstellung der Referenzsignaleinheit des Systems zur Überwachung einer Verkehrssituation gemäß einer weiteren Ausführungsform;
FIG 9 eine schematische Darstellung der Referenzsignaleinheit des Systems zur Überwachung einer Verkehrssituation in Fig. 8 in einem weiteren Zustand; und
FIG 10 eine schematische Darstellung der Referenzsignaleinheit des Systems zur Überwachung einer Verkehrssituation in Fig. 8 in einem weiteren Zustand.

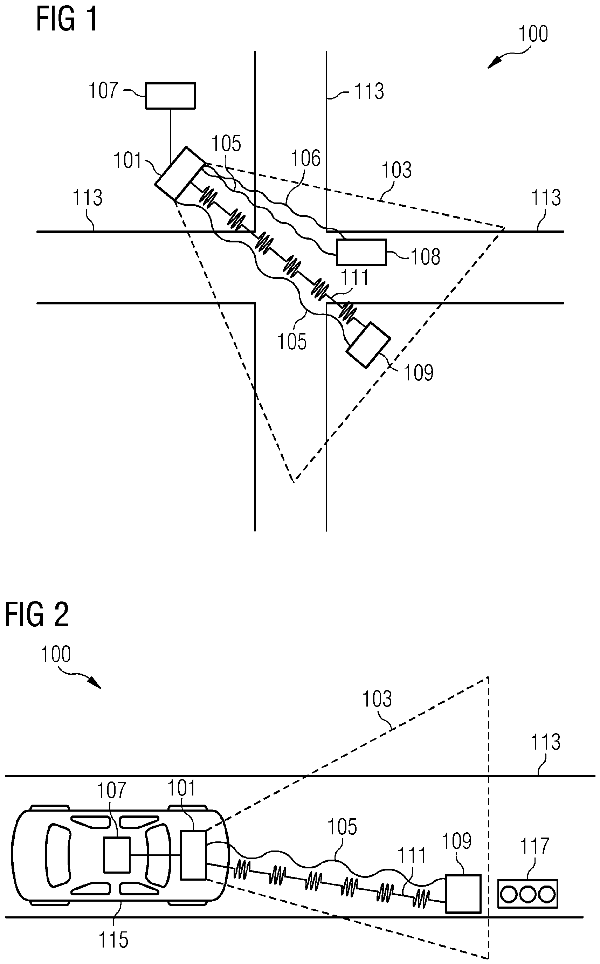

FIG 1 zeigt eine schematische Darstellung eines Systems 100 zur Überwachung einer Verkehrssituation gemäß einer Ausführungsform.

In der Ausführungsform in FIG 1 sind sowohl die Radarsensoreinheit 101 als auch die Referenzsignaleinheit 109 des Systems 100 zur Überwachung einer Verkehrssituation ortsfest an einem Straßenabschnitt 113 angeordnet. In der in FIG 1 gezeigten Ausführungsform ist der Straßenabschnitt 113 als eine Straßenkreuzung ausgebildet.

Die Radarsensoreinheit 101 umfasst einen Überwachungsbereich 103. Der Überwachungsbereich 103 definiert einen Bereich, den die Radarsensoreinheit 101 durch das Aussenden von Radarsignalen 105 und das Detektieren von reflektierten Radarsignalen überwachen kann.

In der Ausführungsform in FIG 1 ist die Referenzsignaleinheit 109 innerhalb des Überwachungsbereichs 103 der Radarsensoreinheit 101 angeordnet.

Die Radarsensoreinheit 101 ist ferner mit einer Prozessoreinheit 107 verbunden.

Ferner ist im Überwachungsbereich 103 der Radarsensoreinheit 101 ein Objekt 108 angeordnet. Das Objekt 108 kann beispielsweise ein Verkehrsteilnehmer oder ein sonstiges detektierbares Objekt sein.

Zum Bestimmen der Verkehrssituation innerhalb des Überwachungsbereichs 103 sendet die Radarsensoreinheit 101 Radarsignale 105 aus. Die ausgesendeten Radarsignale 105 treffen auf das Objekt 108 und werden von dem Objekt 108 als reflektierte Radarsignale 106 zur Radarsensoreinheit 101 zurückreflektiert, die die reflektierten Radarsignale 106 detektiert. Auf Basis der detektierten reflektierten Radarsignale 106 generiert die Radarsensoreinheit 101 Umgebungsdaten der Objekte innerhalb des Überwachungsbereichs 103. Auf Basis dieser Umgebungsdaten der Radarsensoreinheit 101 ermittelt die Prozessoreinheit 107 eine Verkehrssituation innerhalb des Überwachungsbereichs 103. Zwecks Übersichtlichkeit der Abbildung sind in FIG 1 lediglich Radarsignale 105 dargestellt, die zum einen auf das Objekt 108 treffen und zum anderen die Referenzsignaleinheit 109 ausleuchten. Zur Bestimmung der Verkehrssituation innerhalb des Überwachungsbereichs 103 würden zusätzlich Radarsignale 105 ausgesendet, die den gesamten Überwachungsbereich 103 ausleuchten.

Im Zuge des Aussendens der Radarsignale 105 durch die Radarsensoreinheit 101 zum Bestimmen der Verkehrssituation innerhalb des Überwachungsbereichs 103 werden Radarsignale 105 durch die Referenzsignaleinheit 109 als Referenzsignal 111 in Form von modulierten reflektierten Radarsignalen zur Radarsensoreinheit 101 zurückreflektiert. Durch die Modulation des Referenzsignals 111, das durch die Referenzsignaleinheit 109 bei dem Reflexionsprozess den Radarsignalen 105 aufgeprägt werden, kann das von der Radarsensoreinheit 101 detektierte Referenzsignal 111 von der Prozessoreinheit 107 als Referenzsignal der Referenzsignaleinheit 109 identifiziert werden.

Für den Fall, dass die Radarsensoreinheit 101 das Referenzsignal 111 der Referenzsignaleinheit 109 detektiert, bestimmt die Prozessoreinheit 107 den Funktionszustand der Radarsensoreinheit als funktionsfähig und eine Fehlfunktion der Radarsensoreinheit 101 kann ausgeschlossen werden.

Für den Fall, dass die Radarsensoreinheit 101 kein Referenzsignal der Referenzsignaleinheit 109 detektiert, ermittelt die Prozessoreinheit 107 eine Fehlfunktion der Radarsensoreinheit 101 und eine Überwachung der Verkehrssituation innerhalb des Überwachungsbereichs 103 wird als fehlerhaft ermittelt und gegebenenfalls unterbrochen.

In der Ausführungsform in FIG 1 ist die Referenzsignaleinheit 109 ausschließlich als ein Reflektor ausgebildet. Eine zusätzliche Sendeeinheit zum Aussenden des Referenzsignals 111 ist in der Referenzsignaleinheit 109 nicht vorgesehen. Die ausgesendeten Referenzsignale 111 basieren ausschließlich auf den ausgesendeten Radarsignalen 105 der Radarsensoreinheit 101.

Die Radarsensoreinheit 101 kann ein beliebiger handelsüblicher Radarsensor sein. Die ausgesendeten Radarsignale 105 können in einem für Radarsignale üblichen Frequenzbereich angeordnet sein.

Die Modulation der Referenzsignale 111 wird durch die Referenzsignaleinheit 109 dadurch erreicht, indem die Referenzsignaleinheit 109 alternierend zwischen einem ersten Reflexionszustand und einem zweiten Reflexionszustand verschaltet wird. Die von der Referenzsignaleinheit 109 in den ersten und zweiten Referenzzuständen reflektierten Radarsignale unterscheiden sich hierbei in wenigstens einer Eigenschaft. Beispielsweise kann der erste Reflexionszustand dadurch realisiert sein, dass eine Reflexion der Radarsignale 105 durch die Referenzsignaleinheit 109 ermöglicht ist, während im zweiten Reflexionszustand keine Reflexion an der Referenzsignaleinheit 109 erfolgt.

Alternativ zu der in FIG 1 gezeigten Ausführungsform kann das System 100 mehrere Radarsensoreinheiten 101 umfassen, um beispielsweise einen größeren Überwachungsbereich einzusehen bzw. eine genauere Überwachung eines unübersichtlichen Straßenabschnitts zu ermöglichen. Ferner kann das System 100 eine Mehrzahl von Referenzsignaleinheiten 109 umfassen, die jeweils eingerichtet sind, entsprechende Referenzsignale an die Mehrzahl von Radarsensoreinheiten 101 auszusenden.

FIG 2 zeigt eine weitere schematische Darstellung des Systems 100 zur Überwachung einer Verkehrssituation gemäß einer weiteren Ausführungsform.

Abweichend zu der Ausführungsform in FIG 1 ist in der Ausführungsform in FIG 2 die Radarsensoreinheit 101 in einem Fahrzeug 115, insbesondere einem autonom fahrenden Fahrzeug 115, angeordnet. Die Prozessoreinheit 107 ist ebenfalls im Fahrzeug 115 angeordnet. Die Referenzsignaleinheit 109 ist hingegen ortsfest an einem Straßenabschnitt 113 angeordnet.

Insbesondere ist die Referenzsignaleinheit 109 an einer Lichtsignalanlage 117 angeordnet. Abweichend hierzu kann die Referenzsignaleinheit 109 an einer beliebigen Stelle des zu überwachenden Straßenabschnitts 113 angeordnet sein.

Analog zu FIG 1 sendet die Radarsensoreinheit 101 zum Überwachen der Verkehrssituation innerhalb des Überwachungsbereichs 103 Radarsignale 105 aus, detektiert an entsprechenden Objekten innerhalb des Überwachungsbereichs 103 reflektierte Radarsignale, generiert auf Basis der detektierten Radarsignale Umgebungsdaten, die durch die Prozessoreinheit 107 ausgewertet und auf Basis der Umgebungsdaten eine Verkehrssituation bestimmt wird. Zur Vermeidung unnötiger Wiederholungen sind diese Vorgänge in FIG 2 nicht dargestellt.

Von der Radarsensoreinheit 101 ausgesendete Radarsignale 105 werden von der Referenzsignaleinheit 109 reflektiert und ein Referenzsignal 111 in Form eines modulierten reflektierten Radarsignals wird an die Radarsensoreinheit 101 zurückgesendet. Auf Basis dieses Referenzsignals 111 bestimmt die Prozessoreinheit 107 den Funktionszustand der Radarsensoreinheit 101, indem bei Abwesenheit eines entsprechenden Referenzsignals die Radarsensoreinheit als fehlerhaft bestimmt wird.

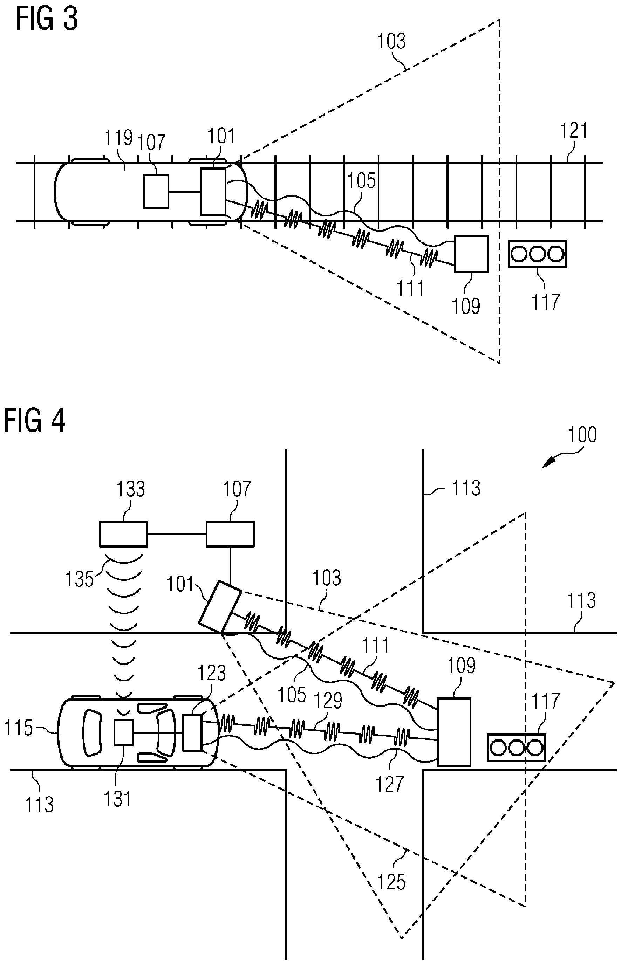

FIG 3 zeigt eine weitere schematische Darstellung des Systems 100 zur Überwachung einer Verkehrssituation gemäß einer weiteren Ausführungsform.

Die Ausführungsform in FIG 3 unterscheidet sich zu der Ausführungsform in FIG 2 lediglich darin, dass die Radarsensoreinheit 101 und die Prozessoreinheit 107 in einem autonom fahrenden Schienenfahrzeug 119 angeordnet sind, das auf einem Schienenabschnitt 121 fortbewegt wird.

FIG 4 zeigt eine weitere schematische Darstellung des Systems 100 zur Überwachung einer Verkehrssituation gemäß einer weiteren Ausführungsform;

Die in FIG 4 dargestellte Ausführungsform basiert auf der Ausführungsform in FIG 1. Zusätzlich zu den in FIG 1 dargestellten Merkmalen umfasst das System 100 in der Ausführungsform in FIG 4 eine weitere Radarsensoreinheit 123 und eine weitere Prozessoreinheit 131, die jeweils in einem autonom fahrenden Fahrzeug 115 angeordnet sind. Die weitere Radarsensoreinheit 123 ist ausgebildet, eine Verkehrssituation innerhalb eines weiteren Überwachungsbereichs 125 zu ermitteln. Hierzu sendet die weitere Radarsensoreinheit 123 weitere Radarsignale 127 aus, die an Objekten innerhalb des weiteren Überwachungsbereichs 125 reflektiert und von der weiteren Radarsensoreinheit 123 detektiert werden. Auf Basis der detektierten weiteren Radarsignalen 127 erstellt die weitere Radarsensoreinheit 123 Umgebungsdaten, auf Basis deren die weitere Prozessoreinheit 131 eine Verkehrssituation innerhalb des weiteren Überwachungsbereichs 125 bestimmt.

Eine Detektion von Objekten innerhalb des Überwachungsbereichs 103 bzw. des weiteren Überwachungsbereichs 125 durch die Radarsensoreinheit 101 bzw. die weitere Radarsensoreinheit 123 ist aufgrund der Übersichtlichkeit der FIG 4 nicht dargestellt.

Von der weiteren Radarsensoreinheit 123 ausgesendete weitere Radarsignale 127 werden an der Referenzsignaleinheit 109, die innerhalb des weiteren Überwachungsbereichs 125 angeordnet ist, reflektiert und weitere Referenzsignale 129 in Form von modulierten reflektierten weiteren Radarsignalen werden von der Referenzsignaleinheit 109 an die weitere Radarsensoreinheit 123 übermittelt. Auf Basis der der weiteren Radarsensoreinheit 123 detektierten weiteren Referenzsignale 129 bestimmt die weitere Prozessoreinheit 131 den Funktionszustand der weiteren Radarsensoreinheit 123, indem bei einem Ausbleiben einer Detektion eines weiteren Referenzsignals 129 durch die weitere Radarsensoreinheit 123 eine Fehlfunktion der weiteren Radarsensoreinheit 123 ermittelt wird.

Über die Modulation der weiteren Referenzsignale 129 sind diese weiteren Referenzsignale 129 durch die weitere Prozessoreinheit 131 eindeutig als Referenzsignale der Referenzsignaleinheit 109 identifizierbar. Hierzu umfasst das System 100 in der Ausführungsform in FIG 4 eine Radioübertragungseinheit 133, die mit der Prozessoreinheit 107 verbunden ist. Über die Radioübertragungseinheit 133 wird mittels Aussendens entsprechender Radiosignale 135 an die Prozessoreinheit 131 Informationen übermittelt, auf Basis deren die weitere Prozessoreinheit 131 die Modulation der weiteren Referenzsignale 129 identifizieren kann.

In der Praxis könnte somit ein autonom fahrendes Fahrzeug 115 in dem Sendebereich der Radioübertragungseinheit 133 fahren und von dieser mittels Übertragung über die Aussendung der Radiosignale 135 die Information erhalten, die benötigt ist, die Referenzsignale der Referenzsignaleinheit 109 zu decodieren, um somit die Referenzsignale der Referenzsignaleinheit 109 eindeutig als Referenzsignale zu identifizieren.

Nach Übertragung der Decodierfunktion durch die Radioübertragungseinheit 133 an die weitere Prozessoreinheit 131 des autonom fahrenden Fahrzeugs 115 könnte dieses, sobald der Straßenabschnitt 113, in dem die Referenzsignaleinheit 109 angeordnet ist, in den weiteren Überwachungsbereich 125 eintritt, die weiteren Referenzsignale 129 über die weitere Radarsensoreinheit 123 empfangen und auf Basis der übermittelten Decodierinformation eindeutig als Referenzsignale identifizieren.

Somit kann erreicht werden, dass beliebig autonom fahrenden Fahrzeuge, die den durch das System 100 überwachten Straßenabschnitt erreichen, mit der benötigten Information versorgt werden, mittels der die beliebigen autonom fahrenden Fahrzeuge die Referenzsignale der Referenzsignaleinheit bzw. der Mehrzahl von Referenzsignaleinheiten des Systems 100 decodieren und somit als Referenzsignale identifizieren können.

Somit kann durch das System 100 für beliebige autonom fahrende Fahrzeuge die Funktionsweise der Radarsensoreinheiten der Fahrzeuge mittels der durch die Referenzsignaleinheit 109 ausgesendeten Referenzsignale überprüft werden.

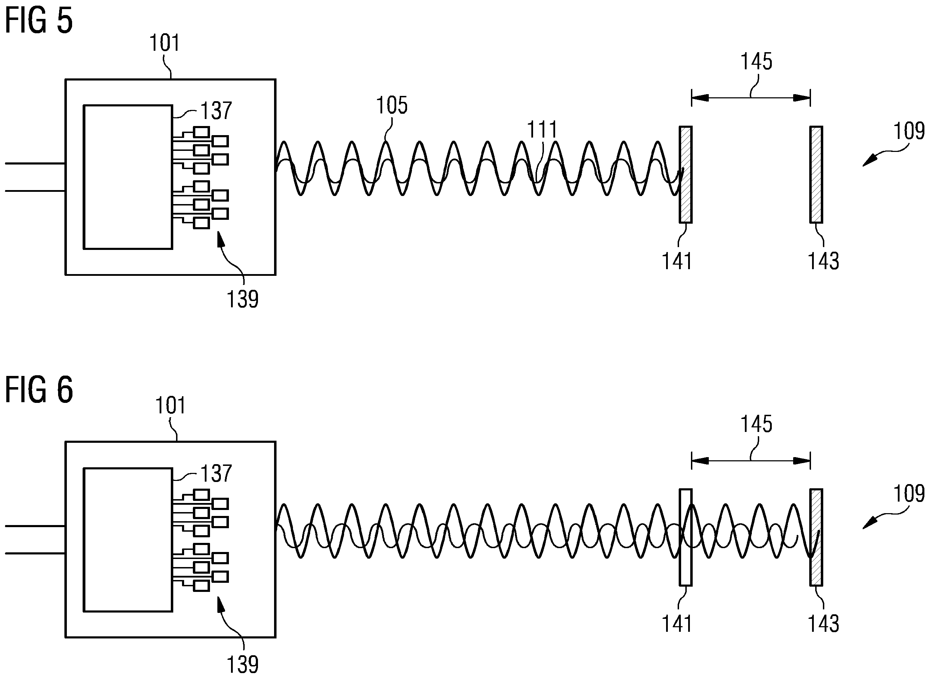

FIG 5 und FIG 6 zeigen eine schematische Darstellung einer Referenzsignaleinheit 109 des Systems 100 zur Überwachung einer Verkehrssituation gemäß einer Ausführungsform in zwei Zuständen.

In der Ausführungsform in FIG 5 und FIG 6 umfasst die Radarsensoreinheit 101 eine Radarlogik 137 und ein Radarantennenarray 139. Beide Komponenten sind Komponenten handelsüblicher Radarsensoren. Mittels der Radarlogik 137 und des Radarantennenarrays 139 ist die Radarsensoreinheit 101 in der Lage, Radarsignale 105 auszusenden.

Ferner sind in FIG 5 und FIG 6 eine erste Reflexionsfläche 141 und eine zweite Reflexionsfläche 143 der Referenzsignaleinheit 109 dargestellt. Die erste Reflexionsfläche 141 und die zweite Reflexionsfläche 143 sind durch einen Abstand 145 zueinander beabstandet.

In FIG 5 ist der Fall gezeigt, dass die erste Reflexionsfläche 141 in einer Reflexionsstellung ist und Radarsignale 105 der Radarsensoreinheit 101 an der ersten Reflexionsfläche 141 der Referenzsignaleinheit 109 reflektiert werden.

In FIG 6 ist der Fall gezeigt, dass die erste Reflexionsfläche 141 in einer Nichtreflexionsstellung, in der keine Reflexion der Radarsignale 105 erfolgt, angeordnet ist, während die zweite Reflexionsfläche 143 in einer Reflexionsstellung angeordnet ist und eine Reflexion der Radarsignale 105 an der zweiten Reflexionsfläche 143 erfolgt.

Durch den Abstand 145 zwischen der ersten Reflexionsfläche und der zweiten Reflexionsfläche besteht ein Unterschied in der Länge der zurückgelegten Wegstrecke zwischen den an der ersten Reflexionsfläche 141 reflektierten Radarsignale und den an der zweiten Reflexionsfläche 143 reflektierten Radarsignale.

Dieser Wegunterschied der an den unterschiedlichen Reflexionsflächen reflektierten Radarsignale ist durch die Radarsensoreinheit 101 detektierbar. Somit kann durch ein alternierendes Verschalten zwischen dem in FIG 5 gezeigten Zustand und dem in FIG 6 gezeigten Zustand der Referenzsignaleinheit 109 ein moduliertes Referenzsignal erzeugt werden, bei dem sich alternierend Abschnitte von an der ersten Reflexionsfläche 141 reflektierten Radarsignale und Abschnitte von an der zweiten Reflexionsfläche 143 reflektierten Radarsignale abwechseln.

Durch das Verschalten zwischen dem in FIG 5 gezeigten ersten Reflexionszustand und dem in FIG 6 gezeigten zweiten Reflexionszustand der Referenzsignaleinheit 109 kann somit ein beliebig moduliertes Referenzsignal mit beliebiger Modulationsfrequenz erzeugt werden.

Alternativ kann eine beliebige Information durch ein entsprechendes Verschalten zwischen den beiden Reflexionszuständen dem Referenzsignal aufgeprägt werden.

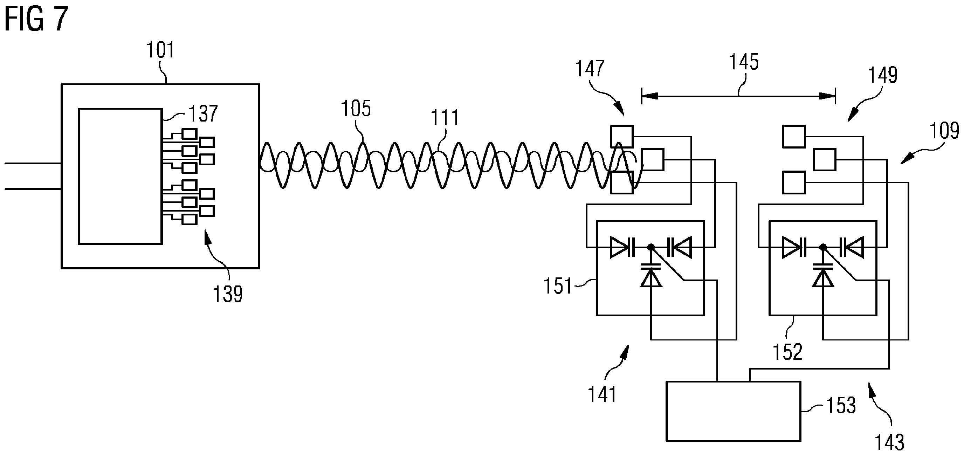

FIG 7 zeigt eine weitere schematische Darstellung der Referenzsignaleinheit 109 des Systems 100 zur Überwachung einer Verkehrssituation gemäß einer weiteren Ausführungsform.

In der Ausführungsform in FIG 7 ist die erste Reflexionsfläche 141 durch ein erstes Antennenarray 151 und die zweite Reflexionsfläche 143 durch ein zweites Antennenarray 149 realisiert. Das erste Antennenarray 147 ist über einen Hochfrequenzschalter 151 mit einer Ansteuerlogik 153 verbunden. Das zweite Antennenarray 149 ist über einen weiteren Hochfrequenzschalter 152 mit der Ansteuerlogik 153 verbunden.

Über die Ansteuerlogik 153 und die beiden Hochfrequenzschalter 151, 152 können abwechselnd die beiden Antennenarrays 147, 149 an- und ausgeschaltet werden. In einem angeschalteten Zustand sind die beiden Antennenarrays 147, 149 eingerichtet, Radarsignale 105 der Radarsensoreinheit 101 zu reflektieren, während in einem ausgeschalteten Zustand die Antennenarrays 147, 149 keine Reflexion der Radarsignale 105 bewirken können.

Das erste Antennenarray 147 und das zweite Antennenarray 149 sind in der Ausführungsform in FIG 6 über den Abstand 145 zueinander beabstandet.

Durch alternierendes An- und Ausschalten der ersten und zweiten Antennenarrays 147, 149 kann somit abwechselnd der in FIG 5 gezeigte erste Reflexionszustand der Referenzsignaleinheit 109 und der in FIG 6 gezeigte zweite Reflexionszustand der Referenzsignaleinheit 109 erzeugt werden. Durch das alternierende An- und Ausschalten der ersten und zweiten Antennenarrays 147, 149 kann somit ein beliebig moduliertes Referenzsignal 111 generiert werden.

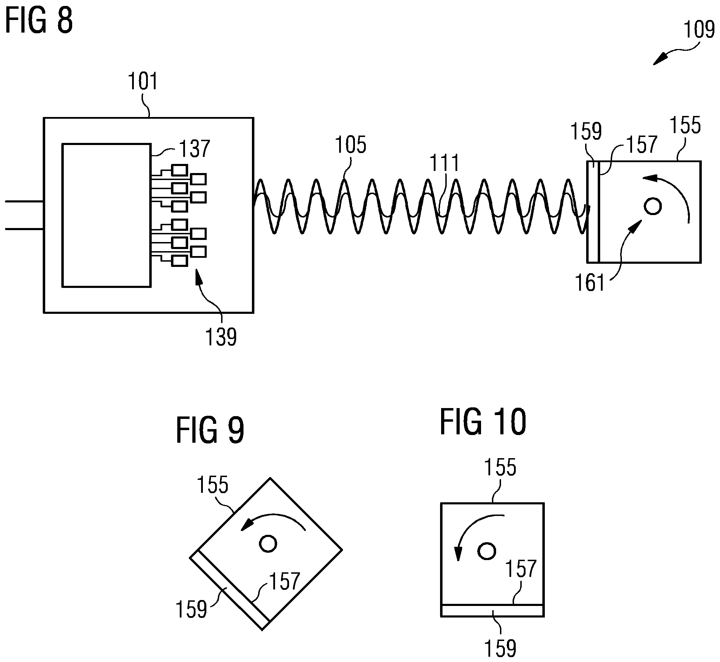

FIG 8, FIG 9 und FIG 10 zeigen eine weitere schematische Darstellung der Referenzsignaleinheit 109 des Systems 100 zur Überwachung einer Verkehrssituation gemäß einer weiteren Ausführungsform in drei Zuständen.

In der Ausführungsform in FIG 8, FIG 9 und FIG 10 umfasst die Referenzsignaleinheit 109 einen Reflektorkörper 155, der wenigstens eine Körperfläche 157 umfasst, auf der eine Reflexionsschicht 159 aufgetragen ist, die eingerichtet ist, Radarsignale zu reflektieren. In der Ausführungsform in FIG 8, FIG 9 und FIG 10 ist der Reflektorkörper 155 als ein quaderförmiger Körper ausgebildet. Alternativ kann der Reflektorkörper 155 eine beliebige Form mit einer Körperfläche 157 aufweisen.

In FIG 8 ist der Fall dargestellt, dass die Körperfläche 157, insbesondere die Reflexionsschicht 159 in Reflexionsstellung angeordnet ist und eine Reflexion der ausgesendeten Radarsignale 105 der Radarsensoreinheit 101 von der Reflexionsschicht 159 reflektiert werden.

In FIG 9 ist der Fall dargestellt, dass die Reflexionsschicht 159 um 45° aus der Reflexionsstellung gedreht ist, sodass eine Verringerung der Reflexionsfähigkeit der Reflexionsschicht 159 erzeugt ist. In FIG 9 ist die Ausrichtung der Radarsensoreinheit 101 und des Reflektorkörpers 155 sowie die Richtung ausgesendeten Radarsignale 105 identisch zu der in FIG 8 gezeigten. Der in FIG 9 gezeigte Fall unterscheidet sich von dem in FIG 8 lediglich durch eine Rotation des Reflektorkörpers 155 um 45°.

In FIG 10 ist der Fall dargestellt, dass die Reflexionsschicht 159 um 90° aus der Reflexionsstellung herausgedreht ist, sodass eine Reflexion der Radarsignale 105 durch den Reflektorkörper 155 nicht erfolgen kann. In FIG 10 ist die Ausrichtung der Radarsensoreinheit 101 und des Reflektorkörpers 155 sowie die Richtung der ausgesendeten Radarsignale 105 identisch zu der in FIG 8 gezeigten. Der in FIG 10 gezeigte Fall unterscheidet sich von dem in FIG 8 lediglich durch eine Rotation des Reflektorkörpers 155 um 90°.

Indem der Reflektorkörper 155 zwischen den in den FIG 8, FIG 9 und FIG 10 dargestellten Zuständen verschaltet wird, kann eine Modulation der reflektierten Radarsignale und ein somit moduliertes Referenzsignal 111 erzeugt werden. Hierzu kann der Reflektorkörper 155 beispielsweise mit einer beliebig wählbaren Rotationsgeschwindigkeit um die Rotationsachse 161 rotiert werden, sodass mit einer entsprechenden Frequenz die Reflexionsschicht 159 in Reflexionsstellung gebracht wird und ein amplitudenmoduliertes Referenzsignal 111 erzeugt werden kann, indem abwechselnd Abschnitte mit reflektierten Radarsignalen und Abschnitte ohne reflektierte Radarsignale aufeinander folgen. Durch die beliebig einstellbare Rotationsgeschwindigkeit kann ein mit beliebiger Frequenz moduliertes Referenzsignal erzeugt werden. Somit kann eine beliebige Codierung dem Referenzsignal aufgeprägt werden.

Alternativ zu den in FIG 1 bis 4 dargestellten Ausführungsformen kann die Referenzsignaleinheit 109 beispielsweise an Fahrzeugen angeordnet werden. Somit können über entsprechende Radarsensoreinheiten, die entweder ortsfest an einem zu überwachenden Straßenabschnitt bzw. Schienenabschnitt installiert sind oder an anderen Fahrzeugen installiert sind, Informationen das jeweilige Fahrzeug betreffend über entsprechend modulierte Referenzsignale ausgetauscht werden.

Damit können Informationen die Verkehrssituation betreffend zwischen einzelnen Fahrzeugen ausgetauscht werden. Alternativ kann Information zwischen einem ortsfesten System und einem fahrenden Fahrzeug ausgetauscht werden. Beispielsweise kann über die an einem Fahrzeug installierte Referenzsignaleinheit ein von einem anderen Fahrzeug oder einer ortsfesten Sensoreinheit übermitteltes Signal bzw. übermittelte Information durch entsprechend moduliertes Referenzsignal als empfangen bestätigt werden.

## Patentansprüche

1. System (100) zum Überwachen einer Verkehrssituation, umfassend: wenigstens eine Radarsensoreinheit (101) zum Aufnehmen von Umgebungsdaten eines Überwachungsbereichs (103) der Radarsensoreinheit (101), wobei die Radarsensoreinheit (101) eingerichtet ist, Radarsignale (105) in Richtung des Überwachungsbereichs (103) auszusenden, von Gegenständen innerhalb des Überwachungsbereichs (103) zur Radarsensoreinheit (101) reflektierte Radarsignale (105) zu Empfangen und auf Basis der empfangenen Radarsignale (105) Umgebungsdaten des Überwachungsbereichs (103) zu generieren; eine Prozessoreinheit (107) zum Auswerten der Umgebungsdaten der Radarsensoreinheit (101) und zum Bestimmen der Verkehrssituation innerhalb des Überwachungsbereichs (103) auf Basis der Umgebungsdaten der Radarsensoreinheit (101); und
eine Referenzsignaleinheit (109) zum Ausgeben eines Referenzsignals an die Radarsensoreinheit (101),
wobei die Referenzsignaleinheit (109) eingerichtet ist, ein von der Radarsensoreinheit (101) ausgesendetes Radarsignal (105) mit einer Modulation zu versehen und als Referenzsignal (111) das modulierte Radarsignal zur Radarsensoreinheit (101) zurück zu reflektieren, und
wobei die Prozessoreinheit (107) eingerichtet ist, das modulierte Radarsignal (105) als Referenzsignal (111) der Referenzsignaleinheit (109) zu identifizieren,
**dadurch gekennzeichnet, dass**
die Prozessoreinheit (107) eingerichtet ist, eine Fehlfunktion die Radarsensoreinheit (101) zu erkennen, falls durch die Radarsensoreinheit (101) kein Referenzsignal (111) empfangen wird,
wobei die Referenzsignaleinheit (109) einen ersten Reflexionszustand und einen zweiten Reflexionszustand aufweist, und wobei ein von der Referenzsignaleinheit (109) im ersten Reflexionszustand reflektiertes Radarsignal (105) in wenigstens einer Eigenschaft von einem von der Referenzsignaleinheit (109) im zweiten Reflexionszustand reflektiertem Radarsignal (105) abweicht, und wobei die Referenzsignaleinheit (109) alternierend zwischen dem ersten Reflexionszustand und dem zweiten Reflexionszustand in einer Schaltfrequenz verschaltbar ist.

2. System (100) nach Anspruch 1,
wobei die Referenzsignaleinheit (109) eine erste Reflexionsfläche (141) aufweist, die eingerichtet ist, Radarsignale (105) der Radarsensoreinheit (101) zu reflektieren, wobei im ersten Reflexionszustand die Reflexionsfläche in eine Reflexionsstellung gebracht ist, in der eine Reflexion der Radar-Signal der Radarsensoreinheit (101) ermöglicht ist, und wobei im zweiten Reflexionszustand die Reflexionsfläche in eine Nicht-Reflexionsstellung gebracht ist, in der eine Reflexion der Radarsignale (105) der Radarsensoreinheit (101) unterbunden ist.

3. System (100) nach Anspruch 2,
wobei die Referenzsignaleinheit (109) ferner eine zweite Reflexionsfläche (143) aufweist, wobei die zweite Reflexionsfläche (143) eingerichtet ist, Radarsignale (105) der Radarsensoreinheit (101) zu reflektieren, und wobei im zweiten Reflexionszustand die zweite Reflexionsfläche (143) in eine Reflexionsstellung gebracht ist, in der eine Reflexion der Radarsignale (105) der Radarsensoreinheit (101) durch die zweite Reflektoreinheit ermöglicht ist.

4. System (100) nach Anspruch 3,
wobei die erste Reflexionsfläche (141) und die zweite Reflexionsfläche (143) in unterschiedlicher Entfernung zur Radarsensoreinheit (101) angeordnet sind.

5. System (100) nach einem der voranstehenden Ansprüche 2 bis 4,
wobei die Referenzsignaleinheit (109) ein erstes Antennenarray (147) und/oder ein zweites Antennenarray (149) umfasst, wobei das erste Antennenarray (147) und/oder zweite Antennenarray (149) eingerichtet ist, Radarsignale (105) der Radarsensoreinheit (101) zu reflektieren, und wobei die erste Reflexionsfläche (141) und/oder die zweite Reflexionsfläche (143) durch das erste Antennenarray (147) und/oder das zweite Antennenarray (149) gebildet ist.

6. System (100) nach einem der voranstehenden Ansprüche 2 bis 4,
wobei die Referenzsignaleinheit (109) einen Reflektorkörper (155) mit wenigstens einer Körperfläche (157) umfasst, wobei auf der wenigstens einen Körperfläche (157) eine Reflexionsschicht (159) aufgetragen ist, wobei die Reflexionsschicht (159) eingerichtet ist, Radarsignale (105) zu reflektieren, und wobei die erste Reflexionsfläche (141) und/oder die zweite Reflexionsfläche (143) durch die auf der wenigstens einen Körperfläche (157) aufgetragenen Reflexionsschicht (157) gebildet ist.

7. System (100) nach einem der voranstehenden Ansprüche, wobei die Radarsensoreinheit (101) ortsfest an einem zu überwachenden Straßenabschnitt (113) oder Schienenabschnitt (121) positioniert ist, und wobei die Referenzsignaleinheit (109) ortsfest im Überwachungsbereichs (103) der Radarsensoreinheit (101) positioniert ist.

8. System (100) nach einem der voranstehenden Ansprüche, ferner umfassend eine weitere Radarsensoreinheit (123) zum Aufnehmen von Umgebungsdaten eines weiteren Überwachungsbereichs (125) der weiteren Radarsensoreinheit (123), wobei die weitere Radarsensoreinheit (123) eingerichtet ist, weitere Radarsignale (127) in Richtung des weiteren Überwachungsbereichs (125) auszusenden, von Gegenständen innerhalb des weiteren Überwachungsbereichs (125) zur weiteren Radarsensoreinheit (123) reflektierte Radarsignale zu Empfangen und auf Basis der empfangenen weiteren Radarsignale (127) weitere Umgebungsdaten des weiteren Überwachungsbereichs (103) zu generieren;
eine weitere Prozessoreinheit (131) zum Auswerten der weiteren Umgebungsdaten der weiteren Radarsensoreinheit (123) und zum Bestimmen der Verkehrssituation innerhalb des weiteren Überwachungsbereichs (125) auf Basis der weiteren Umgebungsdaten der weiteren Radarsensoreinheit (123), wobei die Referenzsignaleinheit (109) eingerichtet ist, von der weiteren Radarsensoreinheit (123) ausgesendete weitere Radarsignale (127) mit der Modulation zu versehen und als weiteres Referenzsignal (129) ein weiteres moduliertes Radarsignal zur weiteren Radarsensoreinheit (123) zurück zu reflektieren, wobei die weitere Prozessoreinheit (131) eingerichtet ist, das weitere modulierte Radarsignal als weiteres Referenzsignal (129) der Referenzsignaleinheit (109) zu identifizieren und eine Fehlfunktion der weiteren Radarsensoreinheit (123) zu erkennen, falls durch die weitere Radarsensoreinheit (123) kein weiteres Referenzsignal (129) empfangen wird, und wobei die weitere Radarsensoreinheit (123) an einem autonom fahrenden Fahrzeug (115) angeordnet ist.

9. System (100) nach einem der voranstehenden Ansprüche, wobei die Schaltfrequenz zwischen 60 MHz bis 85 MHz beträgt.

## Claims

1. System (100) for monitoring a traffic situation, comprising: at least one radar sensor unit (101) for receiving environmental data for a monitoring region (103) of the radar sensor unit (101), wherein the radar sensor unit (101) is configured to transmit radar signals (105) in the direction of the monitoring region (103), to receive radar signals (105) reflected by objects within the monitoring region (103) to the radar sensor unit (101) and to generate environmental data for the monitoring region (103) based on the radar signals received (105);
a processor unit (107) for evaluating the environmental data from the radar sensor unit (101) and for determining the traffic situation within the monitoring region (103) on the basis of the environmental data from the radar sensor unit (101); and
a reference signal unit (109) for outputting a reference signal to the radar sensor unit (101),
wherein the reference signal unit (109) is configured to provide a radar signal (105) transmitted by the radar sensor unit (101) with a modulation and to reflect the modulated radar signal back to the radar sensor unit (101) as a reference signal (111), and
wherein the processor unit (107) is configured to identify the modulated radar signal (105) as the reference signal (111) from the reference signal unit (109), **characterized in that**
the processor unit (107) is configured to detect a malfunction of the radar sensor unit (101) if no reference signal (111) is received by the radar sensor unit (101),
wherein the reference signal unit (109) has a first reflection state and a second reflection state, and wherein a radar signal (105) reflected by the reference signal unit (109) in the first reflection state deviates in at least one property from a radar signal (105) reflected by the reference signal unit (109) in the second reflection state, and wherein the reference signal unit (109) is connectable with a switching frequency alternately between the first reflection state and the second reflection state.

2. System (100) according to Claim 1,
wherein the reference signal unit (109) has a first reflection surface (141), which is configured to reflect radar signals (105) from the radar sensor unit (101), wherein in the first reflection state, the reflection surface has been brought into a reflection position, in which a reflection of the radar signals from the radar sensor unit (101) is possible, and wherein in the second reflection state, the reflection surface has been brought into a non-reflection position, in which a reflection of the radar signals (105) from the radar sensor unit (101) is prevented.

3. System (100) according to Claim 2,
wherein the reference signal unit (109) further has a second reflection surface (143), wherein the second reflection surface (143) is configured to reflect radar signals (105) from the radar sensor unit (101), and wherein in the second reflection state, the second reflection surface (143) has been brought into a reflection position, in which a reflection of the radar signals (105) from the radar sensor unit (101) by the second reflector unit is possible.

4. System (100) according to Claim 3,
wherein the first reflection surface (141) and the second reflection surface (143) are arranged at different distances from the radar sensor unit (101).

5. System (100) according to any of Claims 2 to 4,
wherein the reference signal unit (109) comprises a first antenna array (147) and/or a second antenna array (149), wherein the first antenna array (147) and/or second antenna array (149) is configured to reflect radar signals (105) from the radar sensor unit (101), and wherein the first reflection surface (141) and/or the second reflection surface (143) is formed by the first antenna array (147) and/or the second antenna array (149).

6. System (100) according to any of Claims 2 to 4,
wherein the reference signal unit (109) comprises a reflector body (155) having at least one body surface (157), wherein a reflection layer (159) has been applied to the at least one body surface (157), wherein the reflection layer (159) is configured to reflect radar signals (105), and wherein the first reflection surface (141) and/or the second reflection surface (143) is formed by the reflection layer (157) applied to the at least one body surface (157).

7. System (100) according to any of the preceding claims,
wherein the radar sensor unit (101) is positioned in a fixed location on a road section (113) or rail section (121) to be monitored, and wherein the reference signal unit (109) is positioned in a fixed location in the monitoring region (103) of the radar sensor unit (101).

8. System (100) according to any of the preceding claims,
further comprising a further radar sensor unit (123) for recording environmental data for a further monitoring region (125) of the further radar sensor unit (123), wherein the further radar sensor unit (123) is configured to transmit further radar signals (127) in the direction of the further monitoring region (125), to receive radar signals reflected by objects within the further monitoring region (125) to the further radar sensor unit (123) and to generate further environmental data for the further monitoring region (103) on the basis of the received further radar signals (127);
a further processor unit (131) for evaluating the further environmental data from the further radar sensor unit (123) and for determining the traffic situation within the further monitoring region (125) on the basis of the further environmental data from the further radar sensor unit (123), wherein the reference signal unit (109) is configured to provide further radar signals (127) transmitted by the further radar sensor unit (123) with the modulation and to reflect a further modulated radar signal back to the further radar sensor unit (123) as a further reference signal (129), wherein the further processor unit (131) is configured to identify the further modulated radar signal as the further reference signal (129) from the reference signal unit (109) and to detect a malfunction of the further radar sensor unit (123) if no further reference signal (129) is received by the further radar sensor unit (123), and wherein the further radar sensor unit (123) is arranged on an autonomously driving vehicle (115).

9. System (100) according to any of the preceding claims, wherein the switching frequency is between 60 MHz and 85 MHz.

## Revendications

1. Système (100) de surveillance d'une situation de trafic, comprenant : au moins une unité de capteur radar (101) destinée à enregistrer des données d'environnement d'une zone de surveillance (103) de l'unité de capteur radar (101), l'unité de capteur radar (101) étant conçue pour émettre des signaux radar (105) en direction de la zone de surveillance (103), recevoir des signaux radar (105) réfléchis par des objets situés à l'intérieur de la zone de surveillance (103) vers l'unité de capteur radar (101) et générer des données d'environnement de la zone de surveillance (103) sur la base des signaux radar (105) reçus
une unité à processeur (107) destinée à interpréter les données d'environnement de l'unité de capteur radar (101) et à déterminer la situation du trafic à l'intérieur de la zone de surveillance (103) sur la base des données d'environnement de l'unité de capteur radar (101) ; et
une unité de signal de référence (109) destinée à émettre un signal de référence vers l'unité de capteur radar (101),
l'unité de signal de référence (109) étant conçue pour munir d'une modulation un signal radar (105) émis par l'unité de capteur radar (101) et pour réfléchir le signal radar modulé vers l'unité de capteur radar (101) en tant que signal de référence (111), et
l'unité à processeur (107) étant conçue pour identifier le signal radar modulé (105) en tant que signal de référence (111) de l'unité de signal de référence (109),
**caractérisé en ce que**
l'unité à processeur (107) est conçue pour reconnaître un dysfonctionnement de l'unité de capteur radar (101) si aucun signal de référence (111) n'est reçu par l'unité de capteur radar (101),
l'unité de signal de référence (109) présentant un premier état de réflexion et un deuxième état de réflexion, et un signal radar (105) réfléchi par l'unité de signal de référence (109) dans le premier état de réflexion différant en au moins une propriété d'un signal radar (105) réfléchi par l'unité de signal de référence (109) dans le deuxième état de réflexion, et l'unité de signal de référence (109) pouvant être commutée en alternance entre le premier état de réflexion et le deuxième état de réflexion à une fréquence de commutation.

2. Système (100) selon la revendication 1,
l'unité de signal de référence (109) possédant une première surface de réflexion (141) qui est conçue pour réfléchir des signaux radar (105) de l'unité de capteur radar (101), la surface de réflexion étant, dans le premier état de réflexion, amenée dans une position de réflexion dans laquelle une réflexion des signaux radar de l'unité de capteur radar (101) est rendue possible et, dans le deuxième état de réflexion, la surface de réflexion étant amenée dans une position de non-réflexion dans laquelle une réflexion des signaux radar (105) de l'unité de capteur radar (101) est empêchée.

3. Système (100) selon la revendication 2,
l'unité de signal de référence (109) possédant en outre une deuxième surface de réflexion (143), la deuxième surface de réflexion (143) étant conçue pour réfléchir des signaux radar (105) de l'unité de capteur radar (101) et, dans le deuxième état de réflexion, la deuxième surface de réflexion (143) étant amenée dans une position de réflexion dans laquelle une réflexion des signaux radar (105) de l'unité de capteur radar (101) est rendue possible par la deuxième unité de réflecteur.

4. Système (100) selon la revendication 3,
la première surface de réflexion (141) et la deuxième surface de réflexion (143) étant disposées à des distances différentes de l'unité de capteur radar (101).

5. Système (100) selon l'une des revendications 2 à 4 précédentes,
l'unité de signal de référence (109) comprenant un premier réseau d'antennes (147) et/ou un deuxième réseau d'antennes (149), le premier réseau d'antennes (147) et/ou le deuxième réseau d'antennes (149) étant conçus pour réfléchir des signaux radar (105) de l'unité de capteur radar (101), et la première surface de réflexion (141) et/ou la deuxième surface de réflexion (143) étant formées par le premier réseau d'antennes (147) et/ou le deuxième réseau d'antennes (149).

6. Système (100) selon l'une des revendications 2 à 4 précédentes,
l'unité de signal de référence (109) comprenant un corps de réflecteur (155) pourvu d'au moins une surface de corps (157), une couche de réflexion (159) étant appliquée sur l'au moins une surface de corps (157), la couche de réflexion (159) étant conçue pour réfléchir des signaux radar (105), et la première surface de réflexion (141) et/ou la deuxième surface de réflexion (143) étant formées par la couche de réflexion (157) appliquée sur l'au moins une surface de corps (157).

7. Système (100) selon l'une des revendications précédentes,
l'unité de capteur radar (101) étant positionnée de manière fixe sur une portion de route (113) ou une portion de rail (121) à surveiller, et l'unité de signal de référence (109) étant positionnée de manière fixe dans la zone de surveillance (103) de l'unité de capteur radar (101).

8. Système (100) selon l'une des revendications précédentes,
comprenant en outre au moins une unité de capteur radar supplémentaire (123) destinée à enregistrer des données d'environnement d'une zone de surveillance supplémentaire (125) de l'unité de capteur radar supplémentaire (123), l'unité de capteur radar supplémentaire (123) étant conçue pour émettre des signaux radar supplémentaires (127) en direction de la zone de surveillance supplémentaire (125), recevoir des signaux radar réfléchis par des objets situés à l'intérieur de la zone de surveillance supplémentaire (125) vers l'unité de capteur radar supplémentaire (123) et générer des données d'environnement supplémentaires de la zone de surveillance supplémentaire (103) sur la base des signaux radar supplémentaire (127) reçus ;
une unité à processeur supplémentaire (131) destinée à interpréter les données d'environnement supplémentaires de l'unité de capteur radar supplémentaire (123) et à déterminer la situation du trafic à l'intérieur de la zone de surveillance supplémentaire (125) sur la base des données d'environnement supplémentaires de l'unité de capteur radar supplémentaire (123), l'unité de signal de référence (109) étant conçue pour munir de la modulation les signaux radar supplémentaires (127) émis par l'unité de capteur radar supplémentaire (123) et pour réfléchir un signal radar modulé supplémentaire en tant que signal de référence supplémentaire (129) vers l'unité de capteur radar supplémentaire (123), l'unité à processeur supplémentaire (131) étant conçue pour identifier le signal radar modulé supplémentaire comme signal de référence supplémentaire (129) de l'unité de signal de référence (109) et pour détecter un dysfonctionnement de l'unité de capteur radar supplémentaire (123) si aucun signal de référence supplémentaire (129) n'est reçu par l'unité de capteur radar supplémentaire (123), et l'unité de capteur radar supplémentaire (123) étant disposée sur un véhicule (115) à conduite autonome.

9. Système (100) selon l'une des revendications précédentes, la fréquence de commutation étant comprise entre 60 MHz et 85 MHz.
